Europäisches Patentamt

European Patent Office

Office européen des brevets

(19)

(11) Numéro de publication : **0 296 051 B1**

(12)

# FASCICULE DE BREVET EUROPEEN

(45) Date de publication du fascicule du brevet :
**12.08.92 Bulletin 92/33**

(51) Int. Cl.$^5$ : **A23K 1/00**

(21) Numéro de dépôt : **88401464.8**

(22) Date de dépôt : **14.06.88**

(54) **Additif alimentaire pour animaux, aliments comportant un tel additif et procédé pour améliorer la croissance des animaux.**

Le dossier contient des informations techniques présentées postérieurement au dépôt de la demande et ne figurant pas dans leprésent fascicule.

(30) Priorité : **16.06.87 FR 8708381**

(43) Date de publication de la demande :
**21.12.88 Bulletin 88/51**

(45) Mention de la délivrance du brevet :
**12.08.92 Bulletin 92/33**

(84) Etats contractants désignés :
**AT BE CH DE ES FR GB GR IT LI LU NL SE**

(56) Documents cités :
**DE-B- 2 622 982**

(56) Documents cités :
**US-A- 4 018 650**
**CHEMICAL ABSTRACTS, vol. 106, no. 9, 2 mars 1987, page 527, résumé no. 66306t, Columbus, Ohio, US; & CS-A-232 777 (M.DE-DEK et al.) 15-01-1987**
**DICTIONAIRE VIDAL, 1985, page 142, OVP, Paris, FR**

(73) Titulaire : **GUYOMARC'H NUTRITION ANIMALE**
**TALHOUET en SAINT-NOLFF**
**F-56250 ELVEN (FR)**

(72) Inventeur : **NGuyen, Tan Hung**
**Le Porlair**
**F-56890 Saint-Ave (FR)**

(74) Mandataire : **Martin, Jean-Jacques et al**
**Cabinet REGIMBEAU 26, Avenue Kléber**
**F-75116 Paris (FR)**

## Description

La présente invention concerne un additif alimentaire non médicamenteux promoteur de croissance des animaux, les aliments supplémentés le contenant, ainsi qu'un procédé pour améliorer la croissance des animaux.

Les additifs alimentaires "promoteurs de croissance" sont utilisés depuis longtemps, pour améliorer les performances zootechniques des animaux (mammifères, oiseaux ou poissons). Ce sont des produits obtenus soit par fermentation, soit par synthèse chimique.

Le Chemical Abstract n° 106-66 306t (certificat d'auteur tchécoslovaque n° 232 777) décrit par exemple des aliments pour animaux enrichis en protéases produites par la fermentation de Bacillus cereus et coagulans, sans toutefois donner la preuve de l'apport bénéfique de ces protéines dont la stabilité aux pH acides de l'estomac reste hypothétique.

Une autre classe d'additifs alimentaires tend de plus en plus à, se substituer à ces "promoteurs de croissance" ou à compléter leurs effets : les "probiotiques".

Les probiotiques s'emploient à faibles doses incorporés en continu dans l'aliment des animaux. Ces doses varient selon la nature des produits, l'espèce, l'âge et le niveau d'ingestion des animaux. Toutefois, il est à noter que ces faibles doses n'apportent que quelques milligrammes de protéine microbienne, ce gui permet de bien distinguer cette utilisation des microorganismes en tant que "probiotiques" de l'utilisation des microorganismes en tant que sources de protéine unicellulaire d'origine microbienne (S.C.P. : single Coll. Protein).

Ces nombreux microorganismes ont été proposés comme probiotiques : lactobacillus acidophilus, bifidus, bulgaricus, casei, lactis et plantarum ; Bacillus subtilis, Streptococcus faecium (cremoris) et diacetilactus ; Torulopsia ; Aspergillus oryzae ; Streptomyces.

Cependant, l'utilisation de ces microorganismes comme additifs alimentaires rencontre certaines difficultés ; certaines de ces difficultés viennent notamment du fait que la majorité de ces microorganismes sont détruits, en partie ou en totalité, par la chaleur utilisée dans (ou produite par) les processus technologiques habituels de la fabrication des aliments pour animaux, principalement lors de la granulation (ou pelletisation). Cette destruction rendra bien évidemment nulle ou aléatoire l'efficacité de ces microorganismes.

Il est connu, depuis longtemps, que les spores végétatives des microorganismes "sporulants" peuvent résister à des températures élevées (G.W. Gould et A. Hurst, 1969).

Un additif alimentaire probiotique constitué de spores bactériennes a l'avantage décisif de rester stable dans le processus technologique de fabrication des aliments pour animaux (granulation ou pelletisation).

Un exemple de ce type de probiotiques est la TOYOCERINE® (Nom déposé par la Société Japonaise TOYO JOZO), additif contenant des spores végétatives de Bacillus toyoi.

Il a été trouvé, et cela constitue la base de la présente invention, que le Bacillus cereus souche IP 5832 et les spores végétatives de ce microorganisme constituent des additifs alimentaires particulièrement intéressants pour les aliments destinés aux animaux.

On notera que les spores végétatives du Bacillus cereus non pathogène souche IP 5832 sont commercialisées et utilisées depuis longtemps comme médicament antidiarrhéique en médecine humaine sous la marque BACTISUBTIL®. Cette application fait appel à des apports quotidiens massifs de microorganismes : 3 à 6 milliards de germes chez le nourrisson et l'enfant, et de 4 à 8 milliards de germes chez l'adolescent et l'adulte (Dictionnaire Vidal).

Le brevet DE 2 622 982 décrit l'utilisation de Bacillus cereus lors de la mise en oeuvre d'un procédé de traitement thermique de microorganismes pour l'obtention de protéines à faible teneur en acides nucléiques, qui sont destinées à l'alimentation humaine.

La présente invention concerne donc l'utilisation en tant qu'additif alimentaire non médicamenteux, favorisant la croissance des animaux, de Bacillus cereus souche IP 5832 et/ou de ses spores végétatives.

La présente invention concerne également des aliments supplémentés pour animaux, caractérisés en ce qu'ils contiennent Bacillus cereus souche IP 5832 et/ou les spores végétatives de ce microorganisme. De préférence, ces aliments contiendront, par gramme, 100.000 à 5.000.000 de germes revivifiables dudit microorganisme ou de ses spores végétatives.

Enfin, la présente invention concerne également un procédé pour favoriser la croissance des animaux qui consiste à incorporer à la nourriture desdits animaux, 100.000 à 5.000.000 de germes de Bacillus cereus souche IP 5832 et/ou de ses spores végétatives, par gramme d'aliment.

Les doses d'incorporation peuvent varier selon l'espèce, l'âge, le niveau d'ingestion des animaux et, dans une certaine mesure, selon l'effet recherché. Il appartiendra au spécialiste, à l'aide d'essais systématiques, de déterminer pour chaque usage la dose optimale.

Les aliments peuvent être indifféremment présentés sous toutes les formes habituelles connues en élevage.

2

Les aliments peuvent être des aliments simples ou composés, complets ou complémentaires.

L'eau de boisson des animaux est utilisable aussi comme vecteur alimentaire du Bacillus cereus souche IP 5832 et ses spores.

Les effets bénéfiques de cet additif alimentaire peuvent se résumer comme suit (sur les mammifères, les oiseaux, les poissons) :

– augmenter la croissance des animaux ;

– et/ou abaisser leur indice de consommation (c'est-à-dire la quantité d'aliment nécessaire à une unité de gain de poids), et corrolairement, augmenter leur indice de transformation (c'est-à-dire le gain de poids permis par unité d'aliment).

Dans la pratique, l'additif à incorporer dans les aliments peut se présenter sous forme pure ou en mélange avec divers supports et/ou autres additifs admissibles.

Les exemples suivants illustrent l'invention.

## EXEMPLE 1

96 porcelets sont divisés en quatre lots homogènes de 24 animaux chacun. Les animaux sont logés à raison de 6 animaux par cage dite de "flat deck". Les aliments (en granulés) des porcelets sont respectivement les suivants :

## Lot A :

Formule commerciale servant de témoin.

## Lot B :

Même formule de base que A mais contenant en plus du Bacillus Cereus souche IP 5832 et ses spores.

## Lot C :

Même formule de base que A mais contenant en plus la TOYOCERINE®.

## Lot D :

Même formule de base que A mais contenant en plus un probiotique du commerce Y.

Les performances moyennes des 4 lots après 28 jours d'expérience ont été les suivantes :

| LOTS | A | B | C | D |
|---|---|---|---|---|
| Poids vif (kg)<br>. Initial<br>. Final | 6.23<br>15.41 | 6.25<br>17.23 | 6.26<br>16.40 | 6.26<br>15.86 |
| Gain de poids moyen quotidien (g) | 328<br>(100.0%) | 392<br>(119.5%) | 362<br>(110.4%) | 343<br>(104.6%) |
| Indice de consommation | 1.67<br>(100.0%) | 1.56<br>( 93.4%) | 1.55<br>( 92.8%) | 1.58<br>( 94.6%) |

## EXEMPLE 2

69 lapereaux ont été répartis le jour du sevrage en 3 lots homogènes de 23 animaux chacun. Les animaux sont logés en cages sur grillage, réparties en "blocs casualisés". Les 3 lots d'animaux ont reçu respectivement ces 3 aliments (en granulés) :

Lot A :

Formule commerciale servant de témoin ;

Lot B :

Même formule de base mais contenant la TOYOCERINE®.

Lot C :

Même formule de base mais contenant du Bacillus Cereus souche IP 5832 et ses spores.
Les performances moyennes des animaux ont été les suivantes après 28 Jours d'expérience :

| LOTS | A | B | C |
|---|---|---|---|
| Poids vif (g)<br>. Initial<br>. Final | 690<br>1672 | 689<br>1699 | 717<br>1787 |
| Gain de poids (g) | 982<br>(100.0%) | 1010<br>(102.8%) | 1070<br>(109.0%) |
| Indice de consommation | 2.53<br>(100.0%) | 2.42<br>( 95.6%) | 2.33<br>( 92.1%) |

## EXEMPLE 3

240 poussins femelles d'un jour, de l'espèce Gallus domesticus ont été répartis en 4 lots homogènes de 60 animaux chacun. Les poussins sont logés en cages individuelles, sur grillages, disposées en "blocs casualisés".

Le Lot I reçoit un aliment dit de "démarrage" classique pour poussins et sert de témoin.

Le lot II reçoit le même aliment de base mais contenant en plus du Bacillus Cereus souche IP 5832 et ses spores.

Le lot III reçoit le même aliment de base mais contenant en plus la TOYOCERINE®.

Le lot IV reçoit le même aliment de base mais contenant en plus un promoteur de croissance antibiotique au commerce AVOPARCINE®.

Les aliments sont présentés en farines.

Les performances moyennes des 4 lots de poussins ont été les suivants après 15 jours d'expérience :

EP 0 296 051 B1

| | LOTS | | I | | II | | III | | IV | |
|---|---|---|---|---|---|---|---|---|---|---|
| | Poids vif (g) | | 285 (100,0%) | | 296 (103.8%) | | 292 (102.4%) | | 286 (100.4%) | |
| | Indice de consommation | | 1.74 (100.0%) | | 1.67 (96.0%) | | 1.69 (97.1%) | | 1.72 (98.8%) | |

<u>Exemple 4 :</u>

L'objectif de cet essai est de mesurer l'influence du Bacillus IP 5832, incorporé dans l'alimentation des lapines, sur la croissance des lapereaux depuis leur naissance jusqu'au sevrage.

72 lapines SPF (indemnes de germes pathogènes) gestantes ont été divisées en deux lots à partir de la dernière semaine de leur gestation.

On leur distribue 2 aliments :

– A : Témoin

– B : = A supplémenté avec du Bacillus IP 5832 au taux d'un million de germes par gramme d'aliment.

Ces 2 aliments sont distribués à volonté depuis la dernière semaine de gestation et pendant toute la durée de la lactation (31 jours) suivant la mise bas.

Au sevrage, on a comparé le poids des lapereaux issus des lapines nourries avec ces 2 aliments.

Il est à noter que les animaux SPF sont élevés en batiment "protégé", à l'abri de toute pathologie (l'air est filtré ; les expérimentateurs sont soumis à une douche complète avec schampooing avant de pénétrer dans le local ; vêtements désinfectés, etc ).

Au sevrage, les poids vifs moyens des lapereaux ont été les suivants :

Lot A (Témoin) : 750 g

Lot B (IP 5832) : 807 g (+ 7,5 %)

La différence est significative à l'analyse statistique (p ≤ 0.05).

## Revendications

1. Additif alimentaire non médicamenteux, promoteur de croissance des animaux, qui comprend le Bacillus cereus souche IP 5832 et/ou les spores végétatives de ce microorganisme, caractérisé en ce qu'il contient 100.000 à 5.000.000 de germes revivifiables dudit microorganisme ou de ses spores végétatives, par gramme d'aliment.

2. Aliment supplémenté pour animaux, caractérisé en ce qu'il contient un additif alimentaire selon la revendication 1.

3. Procédé pour améliorer la croissance des animaux, caractérisé en ce qu'il consiste à incorporer dans la nourriture desdits animaux, 100.000 à 5.000.000 de germes revivifiables de Bacillus cereus souche IP 5832 et/ou de ses spores végétatives, par gramme d'aliment.

## Patentansprüche

1. Nicht medikamentöser Tierfutterzusatz als Wachstumspromotor, umfassend Bacillus cereus Stamm IP 5832 und/oder vegetative Sporen dieses Mikroorganismus, dadurch gekennzeichnet, daß er 100.000 bis 5.000.000 lebensfähige Keime des genannten Mikroorganismus oder seiner vegetativen Sporen pro Gramm Futter enthält.

2. Ergänzungsfutter für Tiere, dadurch gekennzeichnet, daß es einen Futterzusatz gemäß Anspruch 1 enthält.

3. Verfahren zur Verbesserung des Tierwachstums, dadurch gekennzeichnet, daß man 100.000 bis 5.000.000 lebensfähige Keime von Bacillus cereus Stamm IP 5832 und/oder seiner vegetativen Sporen pro Gramm Futter in das Tierfutter einbringt.

**Claims**

1. A non-medicinal feed additive promoting the growth of animals, which comprises Bacillus cereus, IP 5832 strain, and/or the vegetative spores of this microorganism, characterized in that it contains 100,000 to 5,000,000 revivable germs of the said microorganism or its vegetative spores per gram of feed.

2. A supplemented animal feed which contains a feed additive according to claim 1.

3. A method for improving the growth of animals, which consists in incorporating, into the feed of the said animals, 100,000 to 5,000,000 revivable germs of Bacillus cereus, IP 5832 strain, and/or its vegetative spores per gram of feed.